# EUROPEAN PATENT SPECIFICATION

(11) **EP 2 997 756 B1**
(45) Date of publication and mention of the grant of the patent: **06.12.2017**
(21) Application number: 13722442.4
(22) Date of filing: 14.05.2013
(51) Int. Cl.: H04W 24/08

(54) **METHOD AND NETWORK DEVICE FOR CELL ANOMALY DETECTION**
VERFAHREN UND NETZVORRICHTUNG ZUR DETEKTION VON ZELLENANOMALIE
PROCÉDÉ ET DISPOSITIF DE RÉSEAU POUR DÉTECTION D'ANOMALIE DE CELL

(43) Date of publication of application: 23.03.2016
(73) Proprietor: Nokia Solutions and Networks Oy, 02610 Espoo (FI)
(72) Inventor: SANNECK, Henning, 81549 München (DE); NOVACZKI, Szabolcs, H-1205 Budapest (HU); CIOCARLIE, Gabriela, New York, New York 10025 (US); LINDQVIST, Ulf, Mountain View, CA 94043 (US)
(74) Representative: Borgström, Markus
(86) International application number: PCT/EP2013/059914
(87) International publication number: WO 2014/183782

(56) References cited:
- WO-A2-2013/023030
- US-A1- 2011 107 155
- US-A1- 2011 154 119

## Description

### Technical field

The invention relates to communication networks. Embodiments of the present invention relate generally to mobile communications and more particularly to network devices and methods in communication networks. In particular, the invention relates to a method for cell anomaly detection, to a network device, to a computer program product and a computer-readable medium.

### Background

US patent application 2011/107155 discloses a network fault detection method in which a data distribution learning unit, based on the data that are received as input, learns the state of the network as a probability distribution of matrix variables, and a fault detection unit, based on the results of learning by the data distribution learning unit, detects, as a fault of the network, a state in which the probability distribution transitions from a distribution that indicates the normal state of the network to a distribution that indicates another state. Current cellular network management systems rely on human or automated alarm capabilities to assess the state of the network domain (i.e. check for alarms). Given the complexity and the continuous growth of cellular infrastructure, this process often does not scale well. Consequently, there may be a need for an automated process in relation to cellular networks in order to detect cell anomaly.

### Summary

According to an exemplary embodiment there may be provided a method for cell anomaly detection according to claim 1. In the following exemplary embodiments are described in relation to the method. It should be understood that all features related to the method may be implemented as hardware and/or software in relation to one or more network devices.

According to exemplary embodiments of the present invention there may be provided a mechanism to manage an increased usage of multimedia streaming applications in mobile networks efficiently. The method may mine information from continuous streams of KPI data (KPI = Key Performance Indicator) and may determine deviation levels of KPIs/cells with high accuracy.

Moreover, according to an exemplary embodiment of the present invention the method may further comprise managing the pool of profiles. This could include adding profiles and/or removing profiles. It could also be foreseen utilizing an aging approach for removing the worst performing profile from the pool of profiles. Thus, ageing out profiles could be performed. It could also be foreseen to provide a human input in order to remove profiles. Thus automatic mechanisms as well as manual mechanisms could be provided alone or could be combined.

Self-Organizing Networks (SON) may be seen as a key enabler for automated network management in next generation mobile communication networks such as LTE or LTE-A, as well as multi-radio technology networks known as heterogeneous networks (HetNet). SON areas include self-configuration, which may cover an auto-connectivity and initial configuration of new network elements (such as base stations), and self-optimization, which may target an optimal operation of the network, triggering automatic actions in case the demand for services, user mobility or usual application usability significantly changes that require adjusting network parameters as well as use cases such as energy saving or mobility robustness optimization. These functionalities are complemented by self-healing, which aims at automatic anomaly detection and fault diagnosis. Related areas may be Traffic Steering (TS) and Energy Savings Management (ESM).

For self-healing, typically only cell outage detection (COD) and cell outage compensation (COC) are mentioned as SON self-healing use cases. However, for exemplary embodiments of the present invention, Cell Anomaly Detection and Cell Diagnosis may be considered: both refer to the outage case and the case that the cell is still able to provide a certain level of service but its performance is below the expected level by an amount clearly visible to the subscribers as well. In other words a cell outage is a special case of degradation meaning that the cell is unable to provide any acceptable service, often meaning that users are not able to connect to it and there is no traffic in the cell at all. Furthermore, this approach clearly separates the detection (detecting relevant symptoms potentially pointing to degradations in the network) and diagnosis functionality (identifying the root cause of an incident).

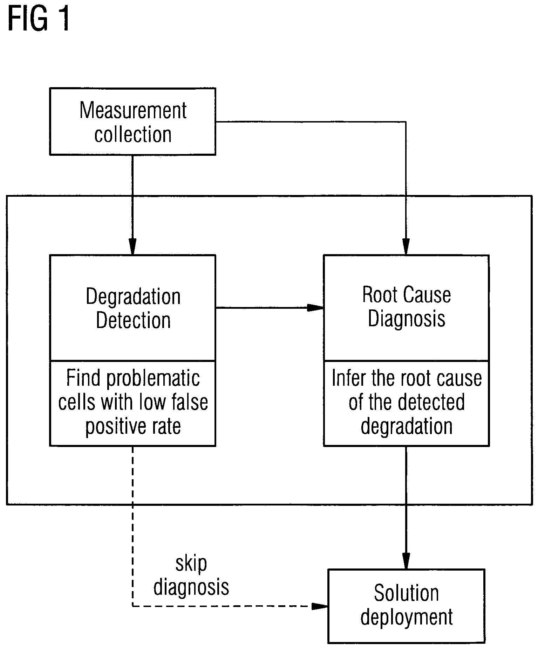

Cell Anomaly Detection may be based on performance monitoring and/or alarm reporting. Performance data includes failure counters such as call drop, unsuccessful RACH access, etc. as well as more complex key performance indicators (KPIs) such as traffic load which needs to be monitored and profiled to describe the "usual" behavior of users and detect if patterns are changing towards a direction that indicates a problem in the network. Two different approaches for Cell Anomaly Detection are existing: a univariate approach where each individual KPI is considered independently, and a multivariate approach, where the correlation between KPIs is taken into account. Both univariate and multivariate detection approaches have been analyzed in the past. They share the characteristic that a (set of) certain "normal" state(s) are learned (called "profiles") in the respective training phase. In the actual detection phase, deviations from those states are identified. An advantage is the highly automatic nature of the process (the operator only needs to verify the training phase as fault free and thus does not need to add per-KPI thresholds and the like). In order to analyze the root cause of a suspected fault, the different KPIs usually have to be correlated with each other to recognize the characteristic imprints of different faults. Figure 1 shows such a process and will be described later on.

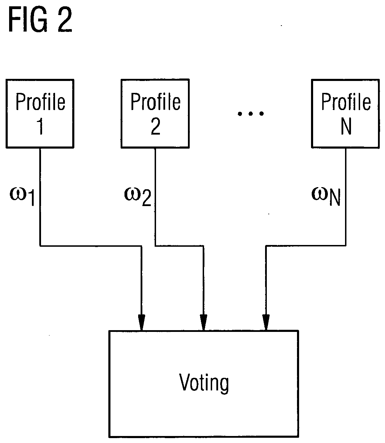

Because of a wide range in the types of KPIs that need to be monitored, and the wide range of network incidents that need to be detected, no single traditional univariate or multivariate detection method ("classifier") will be able to provide the desired detection performance. Detection performance relates to identifying correctly relevant events (true positive) and irrelevant events (true negatives), while avoiding missing relevant events (false negative) and incorrectly identifying events as being relevant (false positive). An exemplary ensemble method, as shown in Figure 2 and described later on, may combine different classifiers and classifies new data points by taking a weighted vote of their prediction, effectively creating a new compound detection method that, with optimized weight parameter values learned by profiling the monitored data, provides an improved method compared to any other single method. Moreover, the ensemble method can also enable an increased level of automation.

There are conventional cell outage detection and recovery methods especially for LTE technology However, typically available commercial features may not contain any "profiling", but rather simple per-KPI thresholding and rule sets. Both univariate and multivariate approaches for cell anomaly / degradation detection have been proposed earlier, but without an ensemble method according to the present invention which takes into consideration the context information available from the network itself.

The ensemble method approach to achieve optimized detection performance when applied to the cell anomaly detection problem may be trained to determine and dynamically adjust weight parameter values for each individual detection method that is part of the ensemble method.

The present invention may provide determining and maintaining weight values so that the performance of the compound ensemble method may be continuously optimized for the data monitored to detect cell anomalies. Moreover, this approach may also propose a triggering mechanism for training new individual detection profiles and an aging mechanism for eliminating the less efficient ones.

The proposed framework may apply individual univariate and multivariate methods to the training KPI data leading to the construction of a pool of different predictors. Using the pool of predictors, the predictions obtained on the KPI data "under test" (i.e., being subject to detection) along with the weights allocated to each predictor lead to the computation of the "KPI level" (i.e., the deviation of a KPI from its "normal" state). The proposed methods rely on context information (available for cellular networks) extracted from human-generated, Configuration Management (CM) or confirmed Fault Management (FM) input data to take informed decisions

### Brief description of drawings

Embodiments of the present invention are described below with reference to the accompanying drawings, which are not necessarily drawn in scale, wherein:
Figure 1 illustrates an exemplary cell anomaly / degradation detection and diagnosis;
Figure 2 illustrates an exemplary general ensemble method approaches for anomaly detection;
Figure 3 illustrates an exemplary overall approach of the proposed ensemble method applied to a single cell in a cellular networks; and
Figure 4 illustrates exemplary aging mechanisms for the profile pool using context information.

### Detailed description of exemplary embodiments

Figure 1 illustrates a block diagram of a cell degradation management method, which may include four different boxes, representing tasks:
1) performance data measurement or measurement collection;
2) degradation detection;
3) root cause diagnosis; and
4) solution deployment.

The degradation detection may have the task to find problematic cells with low false positive rate. The root cause diagnosis may have the task to infer the root cause of the detected degradation. The solution deployment may be triggered by the degradation detection or the root cause diagnosis components.

Figure 2 illustrates an exemplary embodiment of general ensemble method approaches for anomaly detection according to the present invention. The ensemble method learns its weight parameter values and takes the weighted vote of the different profiles in the pool of profiles as s final outcome of the KPI level.

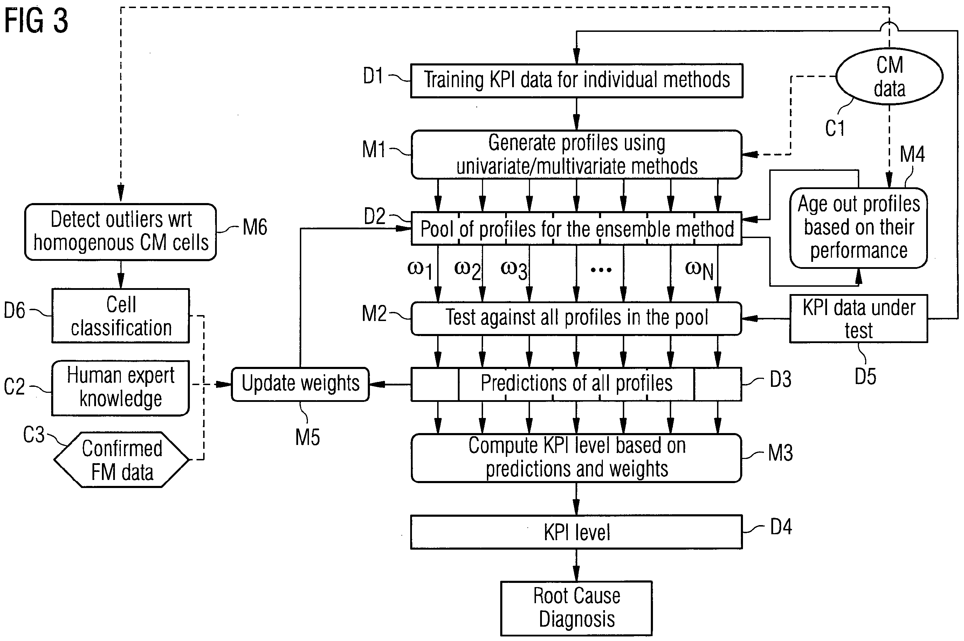

Figure 3 illustrates an exemplary embodiment of a detailed ensemble method approach. There may be provided a measurement collection which aims in a root cause diagnosis as shown in Figure 1. The ensemble method or method in Figure 3 may learn its weight parameter values based on confirmed FM data, human knowledge and/or CM data, used for determining cell outliers with homogeneous CM. The ensemble method uses CM changes to trigger the constructions of new profiles and to age profiles based on their performance. The boxes D1 - D6 are representing data, whereas the boxes M1 - M6 are representing steps of a method. The rest of the elements indicate different context information. The dashed lines indicate that an event is triggered in the presence of new evidence/data.

Figure 3 presents details of an example of an ensemble method according to the present invention, wherein it is distinguished between data, methods, context information and human expert knowledge. Each cell of a cellular network may be characterized by a set of KPI measurements generated as a stream of data. The provided ensemble method may be applied to each cell.
- Initially, for a given period of time, the KPI measurements of a given cell are selected as the training dataset (**D1**) for the pool of profiles of the ensemble method.
- A diverse set of univariate and multivariate algorithms (**M1**) is applied to the training dataset (**D1**). The univariate methods operate at the individual KPI level, while the multivariate methods operate across all KPIs.
- The result of (**M1**) is a set of profiles used as the pool of profiles for the ensemble method **(D2).** Each profile in the pool of profiles has a weight associated with it. For the initial pool of profiles, all profiles have the same weight value associated.
- Given the pool of profiles **(D2),** the stream of KPIs is used in a continuous fashion as the testing dataset (**D5**) against the pool of predictors.
   ∘ Any CM change (**C1**) triggers the testing dataset to also become training KPI dataset, after which the method for generating a new set of profiles (**M1**) is executed. The CM change is determined automatically, based on the state of CM data.
   ∘ If the pool of profiles reaches the maximum number of profiles, the CM change also triggers an aging mechanism **(M4),** which removes profiles from the pool based on both their age and performance.
- The testing dataset (**D5**) is tested against the profiles in the pool of profiles using the testing techniques corresponding to the univariate and multivariate methods **(M2).**
- The result of **(M2)** is a set of KPI level predictions provided by each individual profile in the pool of profiles **(D3).** Some of the predictions are binary (0 for a normal KPI level and 1 for an abnormal KPI level) and some have continuous values in the [0,1] range.
   ∘ Ground truth information updates (human expert knowledge **(C2),** confirmed FM data **(C3)** and cell classification based on CM information **(D6))** triggers the update weights method (**M5**), which penalizes the profiles in the pool of predictors based on their prediction with regards to the ground truth. The human expert knowledge assumes a manual process, while the confirmed FM data usage and outlier detection applied to CM homogenous cells are automated processes.
      ▪ Based on CM data (**C1**), an outlier detection algorithm **(M6)** is applied to cells with identical configurations. The assumption is that CM homogenous cells (i.e., cells with identical/very similar configuration) should exhibit the same behavior across all KPIs. This component takes into consideration the behavior across multiple cells.
      ▪ The result of **(M6)** indicates if the cell under test is considered an outlier or not **(D6)** with respect to cells with homogenous configurations.
   ∘ The result of (**M5**) is an updated pool of profiles **(D2)** with adjusted weights, which continue to be used in the testing mode.
- All the predictions in **(D3)** along with the weights associated with the corresponding profiles are used in a modified weighed majority approach **(M3)** to generate the KPI level.
- The result of **(M3)** is the KPI level **(D4)** associated with each KPI measurement of each cell. The KPI level is then relayed to the Root Cause Diagnosis component.

In summary characteristics of exemplary features of the present invention are:
∘ Using human expert knowledge **(C2)** (allowing for visual inspection and direct input as ground truth) to automatically assess the classification quality of each individual profile and update the weights
∘ Exploiting context information such as CM, FM and special event information to
   ▪ Label data as abnormal and update the ensemble method weights appropriately, which corresponds to real cell degradation phenomenon. This assumes that the FM information has been confirmed by human investigation.
   ▪ Automatically trigger new profiles to be added to the pool of profiles of the ensemble methods based on CM information. With changes in the system, older models need to be aged out based on both age and/or performance (weights). For example, an exponential decay approach can be used for aging less accurate profiles.
   ▪ Determine if a cell reached an anomalous state with regard to similarly configured cells, by leveraging homogenous CM information. Degrade the ensemble method weights corresponding to the outlier cells deemed normal by the corresponding profiles in the pool.

The exemplary method of Figure 3 can be categorized as "supervised learning", i.e., it exposes an interface to a human operator, where the weights and corresponding performance associated with the different detection methods are visible, and enables him with the ability to provide ground truth information on the actual state of the cell under test. Hence the respective MMI (GUI) is characteristic for the invention.

The Weighted Majority Algorithm (WMA) is a meta-learning algorithm (supervised) used to construct a compound algorithm from a pool of prediction methods or prediction algorithms, which is leveraged by the proposed ensemble-based framework. WMA assumes that the problem is a binary decision problem (a sample is either normal or abnormal). Each prediction method or prediction algorithm from the pool has a weight associated with it. Initially, all weights are set to 1. The overall prediction is given by the collection of votes from all predictors. If the majority profiles in the pool make a mistake, their weights are decreased by a certain ratio 0<β<1.

The proposed ensemble method may implement a modified version of WMA that may return a KPI level in the range [0, 1] and may use the context information for updating the weights and creating new models. Initially, the algorithm may start with a set of profiles built using different univariate and multivariate algorithms and then may execute in a continuous fashion. In the following one example for such an implementation is given.

When a CM change is made in the system, a new profile set is created. If a predefined limit of number of models is reached, the worst-performing profiles are removed from the pool using an exponential decay approach (according to *ωᵢ* * *α^{ageᵢ},* where *α* ∈ [0,1] and *ageᵢ* is the number of hours since the model was created).

If the algorithm has access to confirmed FM data or outlier information using homogeneous CM data, it uses this this information to train the weights corresponding to the different univariate and multivariate methods (**M5**): 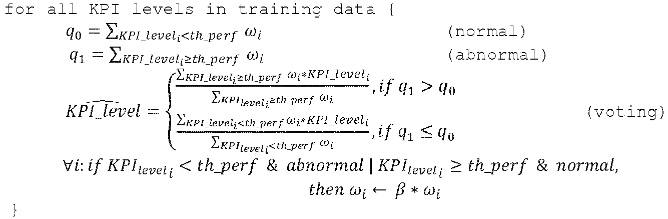 where, th_perf is the threshold that determines if data is deemed normal or abnormal.

The KPI levels **(D4)** are computed according to the learnt weights as follows **(M3):**

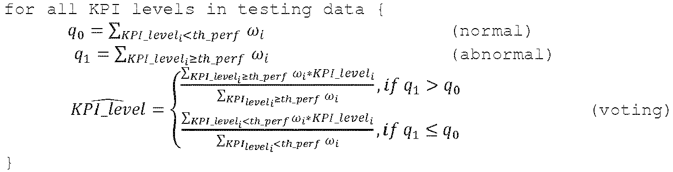

The scheme described herein has been implemented experimentally and evaluated against real network data and has shown to have an anticipated superior detection performance.

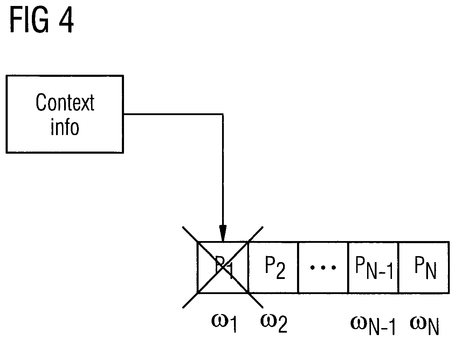

Figure 4 illustrates an ageing mechanism for a pool of profiles comprising profiles P₁-P_{N} including their respective weighting factor ω₁- ω_{N}. If a context information, such as a CM information, changes a current profile, here profile P₁, is deleted due to its age compared to the other profiles P₂-P_{N}. This means the oldest profile P₁ and its weighting factor ω₁ are deleted in the pool of profiles. In summary Figure 4 illustrates how context information can be leveraged for creating and aging out profiles (e.g., based on CM data).

### List of abbreviations

- CM: Configuration Management
- COC: cell outage compensation
- COD: cell outage detection
- ESM: Energy Savings Management
- FM: Fault Management
- GUI: Graphical User Interface
- KPI: Key Performance Indicator
- MDT: Minimization of Drive Tests
- MMI: Man Machine Interface
- NE: Network Element
- NM: Network Management
- OAM: Operation, Administration and Maintenance
- PM: Performance Management
- RACH: Random Access Channel
- RAT: Radio Access Technology
- SON: Self-Organizing Networks
- TS: Traffic Steering
- WMA: Weighted Majority Algorithm

## Claims

1. Method for anomaly detection in a network in which an anomaly detection method is applied to KPI, Key Performance Indicator, training data, the method comprises:
applying to KPI training data (D1) an anomaly detection algorithm that is based on a univariate approach, and applying to the training data (D1) an anomaly detection algorithm that is based on a multivariate approach, to generate a pool of profiles (D2);
- associating a weight with each profile in the pool of profiles (M5);
- testing a testing dataset against one or a plurality of profiles in the pool of profiles (D5, M2) to generate a set of predictions;
- using the set of predictions and the weights to generate a KPI level, defined as deviation of KPI from its normal state, for root cause diagnosis.

2. Method according to claim 1, the method further comprises generating a further profile in the pool of profiles by using a context information (C1), wherein the context information is a configuration management information.

3. Method according to one of the claims 1 to 2, the method further comprises detecting a change of a context information; and triggering an update of at least one weight.

4. Method according to one of the claims 1 to 3, the method further comprises providing at least one weight based on a cell classification (D6).

5. Method according to one of the claims 1 to 4, the method further comprises providing at least one weight based on confirmed Fault Management data (C3).

6. Method according to one of the claims 1 to 5, the method further comprises utilizing Key Performance Indicator measurements for the second training data (D1).

7. Method according to claim 1, the method further comprises utilizing the set of predictions for updating the weights (D3).

8. Method according to one of the claims 1 to 7, the method further comprises managing the pool of profiles.

9. Method according to one of the claims 1 to 8, wherein the method is applied to cells in a network, wherein the method further comprises distinguishing between outlier cells and homogenous cells (M6).

10. Network device for anomaly detection in a network in which an anomaly detection method is applied to KPI, Key Performance Indicator, training data, the network device comprises:
a computing unit for applying to KPI training data (D1) an anomaly detection method that is based on a univariate algorithm and applying to the training data (D1) an anomaly detection algorithm that is based on a multivariate approach, to generate a pool of profiles (D2); and
wherein the computing unit is utilized for associating a weight with each profile in the pool of profiles (M5); for testing a testing dataset against one or a plurality of profiles in the pool of profiles (D5, M2) to generate a set of predictions; and for using the set of predictions and the weights to generate a KPI level, defined as deviation of KPI from its normal state, for root cause diagnosis.

11. Computer program product comprising code portions for causing a network device, on which the computer program is executed, to carry out the method according to any of the claims 1 to 10.

12. Computer-readable medium embodying the computer program product according to claim 11.

## Patentansprüche

1. Verfahren zur Erkennung von Unregelmäßigkeiten in einem Netzwerk, bei dem ein Verfahren zur Erkennung von Unregelmäßigkeiten auf KPI-Trainingsdaten, Leistungskennzahl-Trainingsdaten, angewandt wird, wobei das Verfahren umfasst:
- Anwenden eines Unregelmäßigkeitserkennungsalgorithmus auf KPI-Trainingsdaten (D1), der auf einem univariaten Ansatz basiert, und Anwenden eines Unregelmäßigkeitserkennungsalgorithmus auf die Trainingsdaten (D1), der auf einem multivariaten Ansatz basiert, um eine Gruppe mit Profilen zu erzeugen (D2);
- Assoziieren eines Gewichts mit jedem Profil in der Profilgruppe (M5);
- Testen eines Testdatensatzes hinsichtlich eines oder einer Vielzahl von Profilen in der Profilgruppe (D5, M2), um einen Satz von Vorhersagen zu erzeugen;
- Verwenden des Satzes von Vorhersagen und der Gewichte, um eine KPI-Ebene zu erzeugen, die als eine Abweichung der KPI von ihrem normalen Zustand definiert wird, zur Grundursachendiagnose.

2. Verfahren nach Anspruch 1, wobei das Verfahren ferner umfasst
Erzeugen eines weiteren Profils in der Profilgruppe durch Verwenden von Kontextinformationen (CI), wobei die Kontextinformationen Konfigurationsverwaltungsinformationen sind.

3. Verfahren nach einem der Ansprüche 1 bis 2, wobei das Verfahren ferner umfasst
Erkennen einer Änderung von Kontextinformationen; und
Auslösen einer Aktualisierung von mindestens einem Gewicht.

4. Verfahren nach einem der Ansprüche 1 bis 3, wobei das Verfahren ferner ein Bereitstellen mindestens eines Gewichts auf Basis einer Zellenklassifizierung (D6) umfasst.

5. Verfahren nach einem der Ansprüche 1 bis 4, wobei das Verfahren ferner umfasst
Bereitstellen mindestens eines Gewichts auf Basis von bestätigten Fehlerverwaltungsdaten (C3).

6. Verfahren nach einem der Ansprüche 1 bis 5, wobei das Verfahren ferner umfasst
Einsetzen von Leistungskennzahlmessungen für die zweiten Trainingsdaten (D1).

7. Verfahren nach Anspruch 1, wobei das Verfahren ferner ein Einsetzen des Satzes von Vorhersagen zum Aktualisieren der Gewichte (D3) umfasst.

8. Verfahren nach einem der Ansprüche 1 bis 7, wobei das Verfahren ferner ein Verwalten der Profilgruppe umfasst.

9. Verfahren nach einem der Ansprüche 1 bis 8, wobei das Verfahren auf Zellen in einem Netzwerk angewandt wird, wobei das Verfahren ferner ein Unterscheiden zwischen Ausreißerzellen und homogenen Zellen (M6) umfasst.

10. Netzwerkvorrichtung zur Erkennung von Unregelmäßigkeiten in einem Netzwerk, bei dem ein Verfahren zur Erkennung von Unregelmäßigkeiten auf KPI-Trainingsdaten, Leistungskennzahl-Trainingsdaten, angewandt wird, wobei die Netzwerkvorrichtung umfasst:
eine Recheneinheit zum Anwenden eines Unregelmäßigkeitserkennungsverfahrens auf KPI-Trainingsdaten (D1), das auf einem univariaten Algorithmus basiert, und zum Anwenden eines Unregelmäßigkeitserkennungsalgorithmus auf die KPI-Trainingsdaten (D1), der auf einem multivariaten Ansatz basiert, um eine Gruppe mit Profilen zu erzeugen (D2); und
wobei die Recheneinheit zum Assoziieren eines Gewichts mit jedem Profil in der Profilgruppe (M5) eingesetzt wird; zum Testen eines Testdatensatzes hinsichtlich eines oder einer Vielzahl von Profilen in der Profilgruppe (D5, M2), um einen Satz von Vorhersagen zu erzeugen; und zum Verwenden des Satzes von Vorhersagen und der Gewichte, um eine KPI-Ebene zu erzeugen, die als eine Abweichung der KPI von ihrem normalen Zustand definiert wird, zur Grundursachendiagnose.

11. Computerprogrammprodukt, das Codeabschnitte umfasst, um zu bewirken, dass eine Netzwerkvorrichtung, auf der das Computerprogramm ausgeführt wird, das Verfahren nach einem der Ansprüche 1 bis 10 ausführt.

12. Computerlesbares Medium, das das Computerprogrammprodukt nach Anspruch 11 ausbildet.

## Revendications

1. Un procédé de détection d'anomalies dans un réseau dans lequel un procédé de détection d'anomalies est appliqué à des données d'apprentissage de KPI, indicateur de performance clé, le procédé comprenant :
l'application à des données d'apprentissage de KPI (D1) d'un algorithme de détection d'anomalies qui est basé sur une approche univariée, et l'application aux données d'apprentissage (D1) d'un algorithme de détection d'anomalies qui est basé sur une approche multivariée, de façon à générer un ensemble de profils (D2),
- l'association d'un poids à chaque profil de l'ensemble de profils (M5),
- le test d'un ensemble de données de test vis-à-vis d'un profil ou d'une pluralité de profils de l'ensemble de profils (D5, M2) de façon à générer un ensemble de prédictions,
- l'utilisation de l'ensemble de prédictions et des poids de façon à générer un niveau de KPI, défini sous la forme d'un écart de KPI à partir de son état normal, à des fins de diagnostic de cause profonde.

2. Le procédé selon la revendication 1, le procédé comprenant en outre
la génération d'un autre profil de l'ensemble de profils au moyen d'informations de contexte (C1), les informations de contexte étant des informations de gestion de configuration.

3. Le procédé selon l'une quelconque des revendications 1 à 2, le procédé comprenant en outre
la détection d'une modification des informations de contexte, et
le déclenchement d'une actualisation d'au moins un poids.

4. Le procédé selon l'une quelconque des revendications 1 à 3, le procédé comprenant en outre
la fourniture d'au moins un poids en fonction d'une classification de cellules (D6).

5. Le procédé selon l'une quelconque des revendications 1 à 4, le procédé comprenant en outre
la fourniture d'au moins un poids en fonction de données de gestion d'anomalies confirmées (C3).

6. Le procédé selon l'une quelconque des revendications 1 à 5, le procédé comprenant en outre
l'utilisation de mesures d'indicateur de performance clé pour les deuxièmes données d'apprentissage (D1).

7. Le procédé selon la revendication 1, le procédé comprenant en outre
l'utilisation de l'ensemble de prédictions de façon à actualiser les poids (D3).

8. Le procédé selon l'une quelconque des revendications 1 à 7, le procédé comprenant en outre
la gestion de l'ensemble de profils.

9. Le procédé selon l'une quelconque des revendications 1 à 8, dans lequel le procédé est appliqué à des cellules dans un réseau, le procédé comprenant en outre
la distinction entre des cellules aberrantes et des cellules homogènes (M6).

10. Un dispositif de réseau destiné à une détection d'anomalies dans un réseau dans lequel un procédé de détection d'anomalies est appliqué à des données d'apprentissage de KPI, indicateur de performance clé, le dispositif de réseau comprenant :
une unité informatique destinée à l'application à des données d'apprentissage de KPI (D1) d'un procédé de détection d'anomalies qui est basé sur un algorithme univarié et l'application aux données d'apprentissage (D1) d'un algorithme de détection d'anomalies qui est basé sur une approche multivariée, de façon à générer un ensemble de profils (D2), et
dans lequel l'unité informatique est utilisée pour l'association d'un poids à chaque profil de l'ensemble de profils (M5), pour le test d'un ensemble de données de test vis-à-vis d'un profil ou d'une pluralité de profils de l'ensemble de profils (D5, M2) de façon à générer un ensemble de prédictions, et pour l'utilisation de l'ensemble de prédictions et des poids de façon à générer un niveau de KPI, défini sous la forme d'un écart de KPI de son état normal, à des fins de diagnostic de cause profonde.

11. Un produit de programme informatique contenant des parties de code destinées à amener un dispositif de réseau, sur lequel le programme informatique est exécuté, à exécuter le procédé selon l'une quelconque des revendications 1 à 10.

12. Un support lisible par ordinateur incorporant le produit de programme informatique selon la revendication 11.
